# DEMANDE DE BREVET EUROPEEN

(11) **EP 0 555 177 A1**
(43) Date de publication de la demande: **11.08.1993**
(21) Numéro de dépôt: 93810034.4
(22) Date de dépôt: 20.01.1993
(51) Int. Cl.: F16K 31/06, H01F 7/16

(54) **Valve électromagnétique**

(30) Priorité: 06.02.1992 CH 342/92
(71) Demandeur: HONEYWELL LUCIFER SA, CH-1227 Carouge (Genève) (CH)
(72) Inventeur: Roch, Jean-François, F-74800 La Roche sur Foron (FR)
(74) Mandataire: Meylan, Robert Maurice

(57) **Abrégé**

Valve électromagnétique dont le corps (7) est en matière synthétique et le circuit magnétique est constitué d'une armature fixe (11), d'un noyau mobile (19), d'un manteau (15) entourant l'enroulement (18) et de pièces radiales (13, 17) en contact avec le manteau.

Cette construction permet de simplifier la construction de la valve et d'améliorer ses performances.

## Description

L'invention a pour objet une valve électromagnétique constituée d'un corps en matière synthétique comportant une chambre cylindrique fermée à l'une de ses extrémités par une partie dudit corps et à l'autre extrémité par une armature fixe faisant partie du circuit magnétique de la valve constitué en outre d'une pièce s'étendant parallèlement à l'axe de la valve et reliée magnétiquement à l'armature fixe par au moins une pièce transversale à l'axe de la valve, d'un noyau mobile monté coulissant dans la chambre du corps et poussé par un ressort contre le fond de la chambre opposé à l'armature fixe en l'absence de courant électrique et d'un enroulement entourant la chambre et destiné à créer un champ magnétique pour déplacer le noyau mobile en direction de l'armature fixe.

Le corps en matière synthétique d'une telle valve peut être facilement réalisé par injection. L'enroulement de l'électrovalve peut être réalisé directement sur le corps, ce qui a pour effet de supprimer le bobinage préalable de l'enroulement sur un corps de bobine et le montage de la bobine dans le corps de valve. La valve obtenue est en outre beaucoup plus légère que les valves dont le corps est en métal.

Une valve comportant un corps en matière synthétique autour duquel est bobiné l'enroulement est connue du document DE-A-35 41 942. La protection de l'enroulement est assurée par une résine synthétique surmoulée sur le corps. Le circuit magnétique comprend une culasse constituée, de manière conventionnelle, d'une pièce en Ldont la partie la plus longue est reliée magnétiquement à l'armature fixe par une pièce extérieure radiale. Des valves électromagnétiques analogues sont également connues du document US-A-4 326 696.

La présente invention a pour but d'améliorer de telles valves, tant en ce qui concerne les performances qu'en ce qui concerne la robustesse et la simplicité de fabrication.

Ce but est atteint par la valve selon l'invention telle qu'elle est définie à la revendication 1.

Le manteau cylindrique assure une meilleure fermeture du circuit magnétique que la culasse en L, ce qui a pour effet d'améliorer les performances de la valve. Le manteau assure, d'autre part, une excellente protection, en particulier contre les chocs, de l'enroulement et du corps en matière synthétique, protection qui permet de supprimer le surmoulage de résine. Les pièces du circuit magnétique sont de formes simples, faciles à fabriquer et à assembler, et par conséquent économiques.

Le dessin annexé représente, à titre d'exemple, deux formes d'exécution de l'invention.
La figure 1 est une vue en coupe selon I-I de la figure 2 d'une valve selon une première forme d'exécution de l'invention.
La figure 2 est une vue en coupe selon II-II de la figure 1.
La figure 3 est une demi coupe analogue à celle de la figure 1 d'une seconde forme d'exécution.

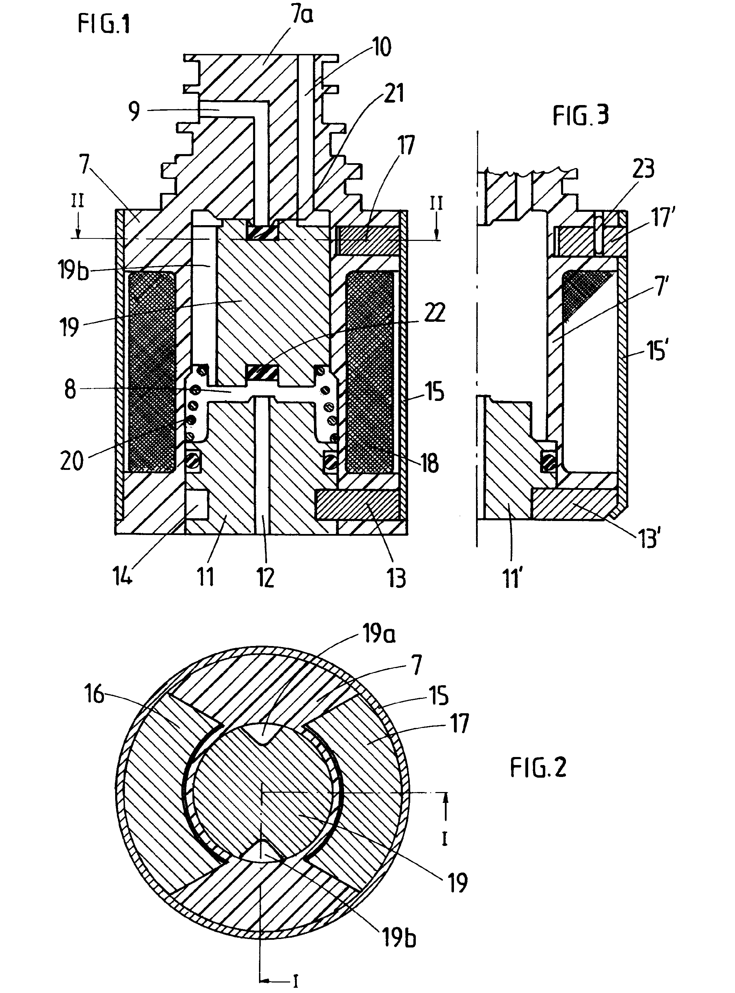

La valve électromagnétique représentée aux figures 1 et 2 est une valve à trois voies constituée essentiellement d'un corps 7 en matière synthétique moulée. Ce corps présente une chambre cylindrique 8 fermée à l'une de ses extrémités par une partie profilée 7a du corps 7 qui présente deux passages 9 et 10 pour un fluide.

L'autre extrémité de la chambre 8 est fermée par une armature fixe 11 en matériau ferromagnétique présentant un passage axial 12 pour le fluide. L'armature fixe 11 est maintenue en place par deux pièces 13 en matériau ferromagnétique, dont l'une seulement est visible à la figure 1. Ces pièces 13 sont en forme de segment s'étendant sur un arc d'environ 90° symétriquement à l'axe de la valve dans des logements radiaux du corps 7 et engagées dans une gorge annulaire 14 de l'armature fixe 11. Ces segments 13 sont en contact avec un manteau cylindrique 15 en matériau ferromagnétique entourant le corps de valve 7 et en contact avec deux autres segments 16 et 17 en matériau ferromagnétique encastrés radialement dans des logements ménagés dans le corps de valve 7 près du fond de la chambre 8. Les segments 16 et 17 s'étendent sur le même arc de cercle que les segments 13 et sont alignés sur ceux-ci. Entre les segments 13 d'une part et les segments 16 et 17 d'autre part, le corps de valve 7 a la forme d'un corps de bobine et porte un enroulement 18. A l'intérieur de la chambre 8 est monté un noyau mobile en matériau ferromagnétique 19 poussé par un ressort 20 contre le fond de la chambre 8. Ce noyau 19 est muni de garnitures 21 et 22 destinées à assurer la fermeture étanche des passages 9 et 12.

L'enroulement 18 est bobiné directement sur le corps de valve 7 obtenu par injection. Ensuite, le noyau mobile 19, le ressort 20 et l'armature fixe 11 sont introduites dans la chambre 8 du corps, puis les segments 13, 16 et 17 sont mis en place. L'armature fixe 11 est fixée par les segments 13. Pour terminer, on fixe le manteau 15 sur le corps de valve et sur les segments 13, 16 et 17. Le manteau 15 peut être fixé par chassage, par serrage par rétraction, par magnétostriction ou par tout autre moyen connu.

La figure 3 illustre un autre mode de fixation des segments et du manteau. Pour simplifier, les pièces correspondant aux pièces de la première forme d'exécution ont été désignées par les mêmes références accompagnées du signe '.

Les segments 13 sont remplacés par une pièce annulaire 13' entourant l'armature 11' et le manteau 15' est serti sur la pièce 13'. Les segments 16 et 17 sont remplacés par deux segments 16' et 17' de même forme mais engagés dans des découpes du manteau 15' de manière à fixer celui-ci sur le corps de valve 7'. Les segments 16' et 17' sont fixés dans leur logement au moyen de goupilles 23.

La construction selon l'invention est bien entendu également applicable à une valve à deux voies, c'est-à-dire présentant seulement les passages 9 et 10 ou 10 et 12.

## Revendications

1. Valve électromagnétique constituée d'un corps en matière synthétique (7 ; 7') comportant une chambre cylindrique (8) fermée à l'une de ses extrémités par une partie dudit corps et à l'autre extrémité par une armature fixe (11 ; 11') faisant partie du circuit magnétique de la valve constitué en outre d'une pièce (15 ; 15') s'étendant parallèlement à l'axe de la valve et reliée magnétiquement à l'armature fixe par au moins une pièce (13 ; 13') transversale à l'axe, d'un noyau mobile (19) monté coulissant dans la chambre du corps et poussé par un ressort (20) contre le fond de la chambre opposé à l'armature fixe en l'absence de courant électrique et d'un enroulement (18) entourant la chambre et destiné à créer un champ magnétique pour déplacer le noyau mobile en direction de l'armature fixe, caractérisée en ce que la partie du circuit magnétique s'étendant parallèlement à l'axe de la valve est constituée d'un manteau cylindrique en matière ferromagnétique (15 ; 15') entourant l'enroulement (18) et que le circuit magnétique est en outre <constitué d'au moins une autre pièce en matériau ferromagnétique (16, 17; 17') s'étendant transversalement à l'axe de la valve à la hauteur du noyau mobile en appui contre le corps en matière synthétique.

2. Valve électromagnétique selon la revendication 1, caractérisée en ce que lesdites pièces en matière ferromagnétique sont constituées de segments (13 16, 17) encastrés dans des logements du corps en matière synthétique et sur lesquels le manteau (15) est fixé par serrage.

3. Valve électromagnétique selon la revendication 1, caractérisée en ce que l'une au moins des pièces en matière ferromagnétique est constituée d'un anneau (13') entourant l'armature fixe.

4. Valve électromagnétique selon la revendication 3, caractérisé en ce que les autres pièces en matière ferromagnétique sont constituées de segments (17') emboîtés dans des découpes du manteau (15').

5. Valve électromagnétique selon l'une des revendications 1 à 4, caractérisée en ce que l'armature fixe 11; 11') est maintenue en place axialement par la pièce (13'), respectivement les pièces (13), en matériau ferromagnétique reliant transversalement le manteau (15; 15') à l'armature fixe (11 ; 11').

6. Valve électromagnétique selon l'une des revendications 1 à 5, caractérisée en ce qu'elle comprend une seule pièce en matière synthétique, à savoir ledit corps (7 ; 7').
